# EUROPEAN PATENT SPECIFICATION

(11) **EP 0 481 432 B1**
(45) Date of publication and mention of the grant of the patent: **13.04.1994**
(21) Application number: 91117585.9
(22) Date of filing: 15.10.1991
(51) Int. Cl.: B62D 1/18

(54) **Steering mechanism for vehicles**
Lenkeinrichtung für Fahrzeuge
Dispositif de direction pour véhicules

(30) Priority: 16.10.1990 SE 9003310
(43) Date of publication of application: 22.04.1992
(73) Proprietor: ASEA BROWN BOVERI AB, 721 83 Västeras (SE)
(72) Inventor: Lundgren, Staffan, SE-871 61 Härnösand (SE)
(74) Representative: Boecker, Joachim, Dr.-Ing.

(56) References cited:
- EP-A- 0 230 258
- DD-A- 204 669
- DE-A- 3 603 557
- SE-B- 371 416
- US-A- 2 926 545

## Description

The invention relates to a steering mechanism for vehicles according to the precharacterising part of claim 1.

The mechanism is primarily intended to be used in trucks and other vehicles equipped with a hydraulic steering system, but it may, in principle, be used also in vehicles with other types of steering systems.

It is previously known, in steering mechanisms of the above-mentioned kind, to arrange the steering control member, usually consisting of a steering wheel, rotatably journalled in an elongated holder, which is supported by a fixing member rotatably mounted at the vehicle body in such a way that the holder together with the steering wheel can be displaced in the longitudinal direction of the holder as well as swung in a vertical plane. In this way, the steering control member may be caused to assume positions adapted to different vehicle operators, in which the fixing member and the holder are capable of being locked. Steering mechanisms of this kind are described, for example, in US-A-2 926 545 and in SE-B-371 416. These known designs, however, do not afford a possibility of changing the position of the steering wheel in the lateral direction, and they cannot be used in trucks or other vehicles in which, for example for reasons of space, it is desired to arrange the steering wheel on a horizontal steering wheel bracket.

The invention aims at developing a steering mechanism for vehicles of the above-mentioned kind which allows a very complex, but easily to handle adjustment of the position of the steering mechanism (steering wheel) to the ergonometric needs of the individual operator.

To achieve this aim the invention suggests a steering mechanism for vehicles according to the introductory part of claim 1, which is characterized by the features of the characterizing part of claim 1.

Further developments of the invention are characterized by the features of the additional claims.

According to the invention the steering control member (steering wheel) is supported by a bracket with practically unlimited possibilities of adjustment to achieve ergonometrically correct driver positions.

By attaching the steering wheel holder to the vehicle body with the aid of an elongated arm bracket with lockable ball couplings at both ends, the steering wheel can be raised and lowered, moved forwards and backwards in a stepless manner, and be tilted at an optional angle.

Further possibilities of adjustment are achieved by designing the arm bracket to be telescopically extendible and provided with an axial position latch. In that way, also the position of the steering wheel in the lateral direction can be adjusted in a stepless manner.

The ball couplings and axial position latch of the arm bracket may suitably be provided with latching handles. This makes it possible to rapidly change the steering wheel adjustment without the use of tools, which is a considerable advantage in vehicles used by several different drivers.

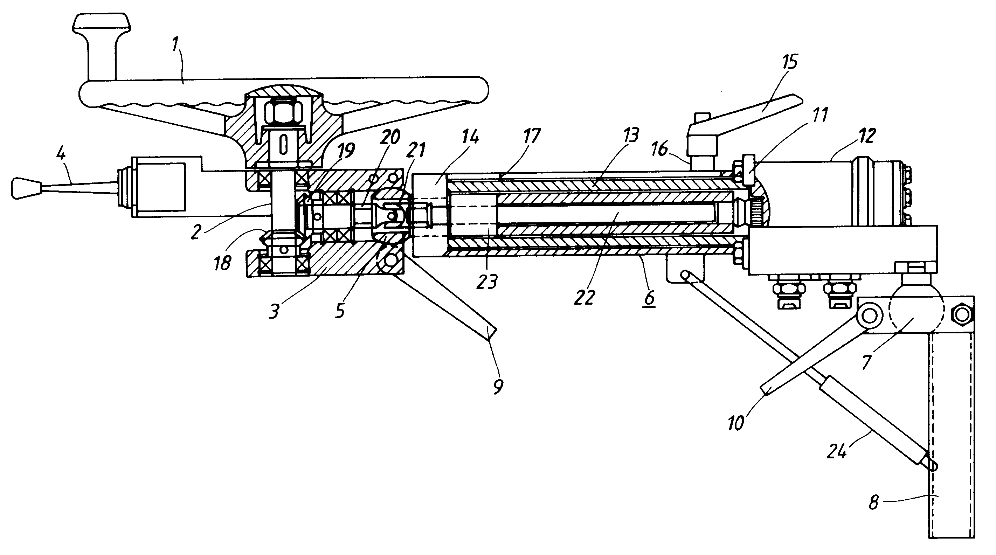

By way of example, the invention will now be described in greater detail with reference to the accompanying drawing which shows, partially in axial section, an embodiment of a steering wheel bracket according to the invention intended for trucks.

The device shown has a steering wheel 1, the shaft 2 of which is journalled in a gear housing 3. The orientation in space of the steering mechanism in the drawing is such that the the steering shaft 2 extends vertically. The driver of the steering mechanism stands or sits either in front of the plane of the drawing or behind that plane. A reversing switch 4 is also attached to the gear housing 3. The gear housing 3 is connected by means of a ball coupling 5 to the outer end of an arm bracket 6, the inner end of which by means of a second ball coupling 7 is connected to a bracket attachment 8. This bracket attachment is intended to be fixed to the truck body, suitably at a corner pillar to the right in the driver's cabin, which provides good possibilities of getting in and out of the truck. The ball couplings 5, 7 are provided with latching handles 9 and 10, respectively, to lock the balls between spherical sockets arranged on the gear housing 3 and the bracket attachment 8, respectively. Between the arm bracket 6 and the bracket attachment 8, a support member 24 in the form of a gas spring is arranged.

The inner end portion of the arm bracket 6 consists of a valve attachment 11 with a hydraulic control valve 12, which via flexible hoses (not shown) is connected to a pressure medium source and to control members for swinging the vehicle wheels.

The arm bracket 6 is designed with an inner tube 13 which is fixed to the valve attachment 11, and an outer tube 14 which is connected to the ball of the ball coupling 5. The tubes 13 and 15 are telescopically displaceable in relation to each other. With the aid of a latching member 16 provided with a hand lever 15, the tubes can be fixed to each other in any desired axial position. A wedge 17 prevents the outer tube 14 from rotating in relation to the inner tube 13.

The steering shaft 2 is connected, by means of conical gear wheels 18, 19, to an intermediate shaft 20 which is directed perpendicularly to the steering shaft. The intermediate shaft 20 is connected, by means of a universal joint 21 placed in the ball coupling 5, to a splines shaft 22, which is axially displaceable in a splines sleeve 23 connected to the control valve 12. When turning the steering wheel, the movement is transmitted through the intermediate shaft 20, the universal joint 21, the splines shaft 22 and the splines sleeve 23 to the control valve 12.

By releasing the latching handle 10, the ball in the ball coupling 7 is released, allowing the arm bracket 6, which in the drawing is shown in a horizontal position, to be turned upwards, downwards, forwards and backwards, all directions to be understood relative to the position of the driver who stands or sits either in front of the plane of the drawing or behind that plane. In this way, the vertical position of the steering wheel and its distance from the vehicle driver may be adjusted in a stepless manner. When the ball coupling 7 is released, the arm bracket 6 is kept floating by a gas spring 24, only small forces then being required for adjusting the steering wheel arm. The desired steering wheel angle can be adjusted by releasing the ball in the ball coupling 5 by means of the latching handle 9, which causes the gear housing 3 to be movable and capable of being adjusted and fixed in the desired position.

Stepless adjustment of the length of the arm bracket 6 is obtained by releasing the latching handle 15, the outer tube 14 then being axially displaceable in relation to the inner tube 13. At the same time, the splines shaft 22 is displaced in relation to the splines sleeve 23.

The invention is not limited to the embodiment shown, but several modifications are feasible within the scope of the claims.

## Claims

1. A steering mechanism for vehicles, comprising a steering control member (1), for example a steering wheel, rotatably journalled in a holder (3), the holder being supported by a fixing member (6), pivotally mounted in the vehicle body, in such a way that the holder (3), together with the steering control member (1), can be raised and lowered as well as be swung in a vertical plane, the steering control member (1) thus being enabled to assume positions adapted to different vehicle drivers, in which positions said fixing member (6) and holder (3) are lockable **characterized** in that the fixing member (6) consists of an elongated arm bracket, one end of which being connected to the holder (3) and the other end of which being connected to the vehicle body (via 8) with the aid of lockable ball couplings (5, 7).

2. A steering mechanism according to claim 1, **characterized** in that the arm bracket (6) comprises an inner and an outer tube (13 and 14, resp.), which are telescopically displaceable in relation to each other, and that a latching member (16) is arranged adjacent the tubes for fixing said tubes to each other in any desired axial position.

3. Steering mechanism according to claim 2, **characterized** in that an operating shaft (22, 23) rotatable by means of a steering control member (1), extends axially through the inner tube (13).

4. Steering mechanism according to any of claims 2 and 3, **characterized** in that the operating shaft comprises two shaft parts (22, 23), interconnected by means of splines, namely a splines sleeve (23) and a splines shaft (22) the latter being arranged axially displaceable in said splines sleeve.

5. Steering mechanism according to any of the preceding claims, **characterized** in that the holder (3) consists of a gear housing comprising a conical gear (18, 19) between the shaft (2) of the steering wheel and an intermediate shaft (20) preferably directed at right angles to said steering shaft (2).

6. Steering mechanism according to claim 5, **characterized** in that the intermediate shaft (20) is connected to one shaft part (e.g. 22) of the operating shaft by means of a flexible or articulated shaft coupling (21), for example a universal joint.

7. Steering mechanism according to any of the preceding claims, **characterized** in that that of the ends of the arm bracket (6) which is connected to the vehicle body consists of a valve attachment (11) with a control valve (12), which is connected to the second shaft part (23) of the operating shaft.

8. Steering mechanism according to any of the preceding claims, **characterized** in that the ball couplings (5, 7) and the latching member (16) of the arm bracket are provided with latching handles (9, 10, 15).

## Patentansprüche

1. Lenkvorrichtung für Fahrzeuge mit einem Bedienungsglied (1), zum Beispiel einem Lenkrad, welches drehbar in einem Halter (3) gelagert ist, der von einem Befestigungsglied (6) getragen wird, welches drehbar im Fahrzeugkörper derart montiert ist, daß der Halter (3) zusammen mit dem Bedienungsglied (1) gehoben und gesenkt sowie in einer vertikalen Ebene geschwänkt werden kann, wodurch das Bedienungsglied (1) imstande ist, Positionen für verschiedene Fahrzeugführer einzunehmen, in welchen Positionen das genannte Befestigungsglied (6) und der Halter (3) festsetzbar sind, **dadurch gekennzeichnet**, daß das Befestigungsglied (6) aus einem langgestreckten Tragarm besteht, dessen eines Ende mit dem Halter (3) verbunden ist und dessen anderes Ende mit dem Fahrzeugkörper (über 8) verbunden ist mit Hilfe festsetzbarer Kugelkupplungen (5,7).

2. Lenkvorrichtung nach Anspruch 1, **dadurch gekennzeichnet**, daß zu dem Tragarm (6) ein inneres und ein äußeres Rohr (13 beziehungsweise 14) gehören, die teleskopierbar zueinander angeordnet sind, und daß ein Verriegelungsglied (16) bei den Rohren vorhanden ist zur Fixierung der Rohre relativ zueinander in jeder beliebigen axialen Position.

3. Lenkvorrichtung nach Anspruch 2, **dadurch gekennzeichnet**, daß eine Betätigungswelle (22, 23), die mittels eines Bedienungsgliedes (1) gedreht werden kann, sich in axialer Richtung durch das innere Rohr (13) erstreckt.

4. Lenkvorrichtung nach einem der Ansprüche 2 und 3, **dadurch gekennzeichnet**, daß die Betätigungswelle zwei Wellenteile (22,23) enthält, die durch Nutenkeile miteinander verbunden sind, und zwar eine Keilhülse (23) und eine Keilwelle (22), wobei die letztere in axialer Richtung in der genannten Keilhülse verschiebbar angeordnet ist.

5. Lenkvorrichtung nach einem der vorhergehenden Ansprüche, **dadurch gekennzeichnet**, daß der Halter (3) aus einem Getriebegehäuse besteht, in welchem ein Kegelradpaar (18,19) enthalten ist, welches zwischen der Welle (2) des Lenkrades und einer Zwischenwelle (20) liegt, die sich vorzugsweise im rechten Winkel zu der genannten Lenkwelle (2) erstreckt.

6. Lenkvorrichtung nach Anspruch 5, **dadurch gekennzeichnet**, daß die Zwischenwelle (20) mit einem Wellenteil (zum Beispiel 22) der Betätigungswelle mittels einer flexiblen oder gelenkigen Wellenkupplung (21), zum Beispiel einem Universalgelenk, verbunden ist.

7. Lenkvorrichtung nach einem der vorhergehenden Ansprüche, **dadurch gekennzeichnet**, daß dasjenige Ende des Tragarms (6), welches am Fahrzeugkörper befestigt ist, aus einer Ventilbefestigung (11) mit einem Steuerventil (12) besteht, welches mit dem zweiten Wellenteil (23) der Betätigungswelle verbunden ist.

8. Lenkvorrichtung nach einem der vorhergehenden Ansprüche, **dadurch gekennzeichnet**, daß die Kugelkupplungen (5,7) und das Verriegelungsglied (16) des Tragarms mit Verriegelungshandgriffen (9,10,15) versehen sind.

## Revendications

1. Un mécanisme de direction pour des véhicules, comprenant un organe de commande de direction (1), par exemple un volant, monté de façon tournante dans un support (3), le support étant supporté par un organe de fixation (6), monté de façon pivotante dans la carrosserie du véhicule, d'une manière telle que l'on puisse faire monter et descendre, et également pivoter dans un plan vertical, le support (3) ainsi que l'organe de commande de direction (1), l'organe de commande de direction (1) pouvant ainsi prendre des positions qui sont adaptées à différents conducteurs de véhicule, et l'organe de fixation (6) et le support (3) pouvant être verrouillés dans ces positions, **caractérisé** en ce que l'organe de fixation (6) consiste en un bras allongé dont une extrémité est accouplée au support (3) et dont l'autre extrémité est accouplée à la carrosserie du véhicule (par l'intermédiaire de l'organe (8)), à l'aide d'accouplements à rotule verrouillables (5, 7).

2. Un mécanisme de direction selon la revendication 1, **caractérisé** en ce que le bras (6) comprend un tube intérieur et un tube extérieur (respectivement 13 et 14), qui peuvent être déplacés mutuellement de façon télescopique, et en ce qu'un organe de verrouillage (16) est placé en position adjacente aux tubes pour fixer les tubes l'un à l'autre dans n'importe quelle position axiale désirée.

3. Mécanisme de verrouillage selon la revendication 2, **caractérisé** en ce qu'un arbre d'actionnement (22, 23) que l'on peut faire tourner au moyen de l'organe de commande de direction (1),s'étend axialement à travers le tube intérieur (13).

4. Mécanisme de direction selon l'une quelconque des revendications 2 et 3, **caractérisé** en ce que l'arbre d'actionnement comprend deux éléments d'arbre (22, 23), mutuellement accouplés au moyen de cannelures, à savoir un tube cannelé (23) et un arbre cannelé (22), ce dernier étant disposé de façon à pouvoir être déplacé en direction axiale dans le tube cannelé.

5. Mécanisme de direction selon l'une quelconque des revendications précédentes, **caractérisé** en ce que le support (3) consiste en un carter d'engrenages comprenant une roue dentée conique (18, 19) qui est intercalée entre l'arbre (2) du volant et un arbre intermédiaire (20) qui est de préférence orienté perpendiculairement à l'arbre de direction (2).

6. Mécanisme de direction selon la revendication 5, **caractérisé** en ce que l'arbre intermédiaire (20) est accouplé à un élément d'arbre (par exemple 22) de l'arbre d'actionnement au moyen d'un accouplement d'arbres flexible ou articulé (21), par exemple un joint de Cardan.

7. Mécanisme de direction selon l'une quelconque des revendications précédentes, **caractérisé** en ce que celle des extrémités du bras (6) qui est accouplée à la carrosserie du véhicule consiste en un adaptateur de vanne (11) associé à une vanne de commande (12) qui est accouplé au second élément d'arbre (23) de l'arbre d'actionnement.

8. Mécanisme de direction selon l'une quelconque des revendications précédentes, **caractérisé** en ce que les accouplements à rotule (5, 7) et l'organe de verrouillage (16) du bras sont équipés de poignées de verrouillage (9, 10, 15).
